# EUROPEAN PATENT APPLICATION

(11) **EP 3 203 431 A1**
(43) Date of publication of application: **09.08.2017**
(21) Application number: 17154311.9
(22) Date of filing: 02.02.2017
(51) Int. Cl.: G06Q 30/02

(54) **A SYSTEM AND METHOD BASED ON USER FEEDBACK OF MAXIMIZING THE CHANCES THAT A USER WILL CONSUME A COUPON**

(30) Priority: 02.02.2016 IL 24391616
(71) Applicant: Deutsche Telekom AG, 53113 Bonn (DE)
(72) Inventor: KATZ, Gilad, Rehovot (IL); SHABTAI, Asaf, 7684200 Hulda (IL); PROHL, Matthias, 50674 Köln (DE); KETABDAR, Hamed, 10825 Berlin (DE); ELOVICI, Yuval, 7986400 D.N. Lachish (IL)
(74) Representative: Maiwald Patentanwalts GmbH

(57) **Abstract**

A method for assessing the interest of a user to mobile recommendations and a system for performing that method are described. In a learning phase the method associates data collected from a user's mobile device with the interest level of the user obtained through questioners and user studies. In this way, an association model is built between users' ratings and the contextual data collected after sending a coupon/offer. The model is then used in an operational phase to evaluate interest of the user without explicit questionnaires.

## Description

### Field of the Invention

The invention is from the fields of mobile communication. Specifically the invention is from the field of recommendation processes that utilize the capabilities of mobile communication networks and devices to provide businesses with the ability to supply coupons to potential customers in a cost effective manner. More specifically the invention relates to a method for evaluating the attractiveness of the coupons that are offered.

### Background of the Invention

A coupon is a document provided by a retailer, manufacturer, or service provider to potential customers that can be exchanged for a discount when purchasing a product or service. The purpose of the coupon is to attract price conscious consumers to buy specific products and/or to attract new customers. Originally coupons were printed in newspapers, magazines, or on the packaging of goods and the customer would cut them out and take them to the retail store/s specified on the coupon to be redeemed. In recent years with the development of the internet, and more recently mobile communication services, coupons are more and more being distributed in electronic form.

Smart mobile communication devices, being small computers that are always connected to the internet and carried by consumers, are increasingly being used for context-based recommendation. Existing applications for mobile devices push messages and coupons to the device owner mainly based on his location. However the mobile devices comprise sensors that provide mobile service providers with a great deal more information than just the location of the device holder. These mobile devices comprise sensors that provide information about the users' location but may also include many other attributes such as degree of activity, application used, communication behavior, orientation of the device etc. This additional information includes, degree of activity, data usage, incoming and outgoing call and messaging logs, location of friends etc. In addition information about a specific user's social connections, e.g. "friends" from social networks, is readily available.

Recommendation processes are processes that enable a service provider to offer different business the option to promote their products by offering coupons/discounts/offers to their potential customers via an application on the potential customers' mobile communication devices. In order to be attractive to the business the applications must be designed to maximize the coupons/discounts/offers consumption while minimizing the cost to the businesses.

Recommendation processes and various aspects of recommendation processes that have been invented to achieve the goals described above are described in the following patent applications of the Applicant of the present application: US 14/691,895; IL 233168; IL 236016; and IL 238576.

In a recommendation process, it is always necessary to evaluate the attractiveness of an offer to a potential user. This can be more challenging than the recommendation process itself. One simple approach can be checking if the user has consumed, i.e. used, the offer, which clearly indicates interest. However, offers may be still partly interesting but not consumed due to different constraints, e.g. the user may not have enough credit to spend on an offer, has an invitation to a dinner, or is late to a meeting. A different approach for assessing the interest of the user is rating questionnaires. However, repeatedly asking a user for ratings on offers can be inconvenient and annoying to the user.

It is a purpose of the present invention to provide a method of accessing the interest of a user in consuming the coupons offered to him/her by a recommendation process.

Further purposes and advantages of this invention will appear as the description proceeds.

### Summary of the Invention

In a first aspect the invention is a system for executing a method of maximizing the chance that a user will consume a coupon offered to him by the operator of a coupon recommendation system via the user's mobile communication device. The system comprises:
a. an application running on a user's mobile communication device that is responsible for collecting and sending raw sensor data and interacting with the user showing him coupons recommended by the system;
b. a database that contains all user data including sensor data sent from the user's mobile device, coupons offered, and coupons consumed;
c. an analytics services module, which comprises a processor and software containing algorithms configured for deriving high level useful information from the sensor data; the analytics services module also comprises communication components configured to access data sources that are external to the system;
d. a recommendation module, which comprises a processor and software containing algorithms that are configured to process contextual data and to introduce the processed data into a recommendation model configured to select a set of offers for the specific user; and
e. an attractiveness module, which comprises a processor and software algorithms configured to build a model that is configured to evaluate interest of the user in a coupon offered to him, to use the model to derive interest scores for each of the coupons in the set of offers selected by the recommendation module, and to send the interest scores to the recommendation module, which uses them to predict which coupon or coupons is most likely to be consumed by the user.

In embodiments of the system of the invention the contextual data comprises raw sensor data received from the mobile device and non-device related data received from the analytic services module.

In embodiments of the system of the invention the processor and software of the recommendation module are also responsible for updating the recommendation model based on previous offers and consumptions.

In a second aspect the invention is a method of using the system of the first aspect to maximize the chance that a user will consume a coupon offered to him by the operator of a coupon recommendation system via the user's mobile communication device by evaluating the interest of the user in a coupon/offer before it is sent to him/her.

The method comprises two phases: a training phase in which a model that associates contextual data to the interest level of the user obtained through questioners and user studies is built by software algorithms in the processor of the attractiveness module of the system and an operational phase in which attributes extracted from contextual data are fed into the model built during the training phase in order to obtain interest scores, which are sent from the attractiveness module to the recommendation module.

In embodiments of the method of the invention the training phase comprises:
a. sending contextual data comprising raw sensor data from the mobile device and external data from the analytics service module to the attractiveness module;
b. executing software algorithms in the processor of the attractiveness module to slice the contextual data into frames of limited time duration;
c. executing software algorithms in the processor of the attractiveness module to extract attributes from the contextual data based on statistical measures;
d. executing software algorithms in the processor of the attractiveness module to extract interest labels for each coupon from information collected from users in interviews or questionnaires and/or from knowledge supplied from the recommendation module concerning whether the coupon was consumed ; and
e. executing software algorithms in the processor of the attractiveness module to train the model by learning the association between the attributes of the contextual data and the interest labels extracted from the information collected from users.

In embodiments of the method of the invention the model is one of a Gaussian Mixture Model or a Decision Tree.

In embodiments of the method of the invention the statistical measures used in the training phase comprise at least one of mean, variance, and the correlation between them.

In embodiments of the method of the invention the operational phase comprises:
a. sending contextual data comprising raw sensor data from the mobile device and external data from the analytics service module to the attractiveness module;
b. executing software algorithms in the processor of the attractiveness module to slice the contextual data into frames of limited time duration;
c. executing software algorithms in the processor of the attractiveness module to extract attributes from the contextual data based on statistical measures;
d. feeding the attributes extracted from the contextual data into the model trained by software algorithms in the processor of the attractiveness module;
e. executing software comprising the trained model in the processor of the attractiveness module to obtain interest scores;
f. sending the interest scores from the attractiveness module to the recommendation module;
g. executing a predictive core algorithm of the recommendation process in the recommendation module to predict which coupon or coupons are most likely to be consumed by the user.

All the above and other characteristics and advantages of the invention will be further understood through the following illustrative and non-limitative description of embodiments thereof, with reference to the appended drawings.

### Brief Description of the Drawings

- Fig. 1 schematically shows the main components of a coupon recommendation system that includes an attractiveness module configured to execute the method of the invention;
- Fig. 2 schematically shows the steps of an algorithm designed to execute the training phase of the method of the invention; and
- Fig. 3 schematically shows the steps of an algorithm designed to execute the operational phase of the method of the invention.

### Detailed Description of Embodiments of the Invention

The invention is a method based on data collected from a user's mobile device in order to assess the interest of the user to mobile recommendations. A model is built that associates such data to the interest level of the user obtained through questioners and user studies. In this way, an association model is built between users' ratings and the contextual data collected after sending a coupon/offer. The model can then be used to evaluate interest of the user, without explicit questionnaires.

Herein the word "context" is defined as both the external environment (time of day, day of week, weather, temperature, traffic, location of the customer, location of the customer's friends etc.) and the internal environment (mood, hunger level, current activity, the manner in which the mobile device is used etc.) in which the customer operates. "Contextual data" is data related to the current context of a user. Contextual data is collected in a specific time window typically either a short interval of time before, during, or after (or a combination of two or all three of these) a coupon is sent to the user's mobile device.

The method comprises two phases - a training phase followed by an operational phase. During the training phase, the system learns the association between contextual data collected after an offer is sent and the user's interest to the offer. In the operational phase, the system observes the behavior of the user after receiving an offer and provides a score on the level of interest of the user to the offer. The purposes of the method are to find similar behaviors or patterns that occur in instances in which offer was accepted and to try to understand whether a rejected offer is completely unacceptable or whether it is a good offer that simply was made at a bad time.

Both The training phase and the operational phase require identical steps of collection of contextual data and attribute extraction.

Contextual data can be collected in several ways, e.g. by continuously monitoring the recommendation app on the user's mobile device or during a window interval starting a few seconds before the offer appears on the device and extending for a predetermined period of time after the offer appears on the device or during a window interval starting a few seconds before the offer appears on the device and extending for a predetermined period of time after the user opens the app or views the details of the offer.

The contextual data includes raw sensor data collected from sensors integrated on the mobile device and non-device related data. Sensor data includes, for example, motion information collected by the accelerometer and gyroscope located on the mobile device, voice activity data collected by the embedded microphone, and touch patterns on the screen. Non-device related data includes, for example, weather information, temperature, date and time.

The contextual data can represent indicators of interest. For instance, from this data it can be determined if the offer is noticed, by checking readings from the accelerometer to see if the device is moved from its original position or picked up. The delay for noticing the offer can also be measured. Useful indications of a user's interest is whether the additional info "button" on the screen with the offer is clicked and how long the user spends looking at the coupon. The movement sensor on the device can give an indication of a user's interest if the user receives an offer while walking on the street and suddenly stops to read it in detail. Consumption behavior, especially for food, is a social behavior. Therefore the location of geographical location of friends who are nearby and have the app installed on their devices may influence a user's interest in a coupon offered to him.

The contextual data collected in a time window interval is passed through a preprocessing phase which extracts distinctive attributes from the data. Attribute extraction allows reducing the amount of data to be processed, while highlighting discriminative aspects of data.

Examples of attributes extracted from motion data (accelerometer and gyroscope) include statistical parameters (min, max, variance) measured within the time window, as well as correlation between motion data along different axis. In addition, frequency content based features can also be used. The attributes extracted from voice are mainly based on frequency content of voice signals sent from the microphone in the time window.

In addition to attributes extracted from the contextual data, mood and emotion indicators can be also extracted from the raw data such as typing speed and whether the speed is constant, backspacing to correct errors, excessive use of certain keys such as the exclamation mark key, tone and volume of voice, and shaking of the phone.

In the training phase, after the attributes have been extracted from the contextual data, a model is created which maps the correlation between the extracted attributes and user's level of interest.

In order to create the model, interest labels indicating the interest level of the users to offers are necessary. User interest can be measured via either implicit or explicit user feedback. Explicit feedback is the favored approach for gathering information on user preferences. Explicit feedback is mainly based on questionnaires connected with the offered content, where users are asked to provide feedback - for example via a value point on a fixed scale - on how much they are interested in some content. In the implicit approach however, user interest is inferred by observing consumption patterns and other information extracted from the users mobile device. However, as discussed herein above modeling user interest on the basis of implicit feedback has limitations, for example the assumption that the amount of time that users spend accessing a given content is directly proportional to how much they are interested in it is not valid in a great many cases. Although explicit feedback adds a burden on the users and different users might respond differently to requests to provide such feedback, it is generally accepted that explicit data is more reliable in most situations.

Therefore, in the training mode of the method of the invention, the preferred method of obtaining the interest labels indicating the interest level of the users is user studies and interviews/questionnaires which run in parallel to the data collection.

A training algorithm then builds the model by learning the association between the interest labels and the attributes extracted from the contextual data collected immediately after sending an offer.

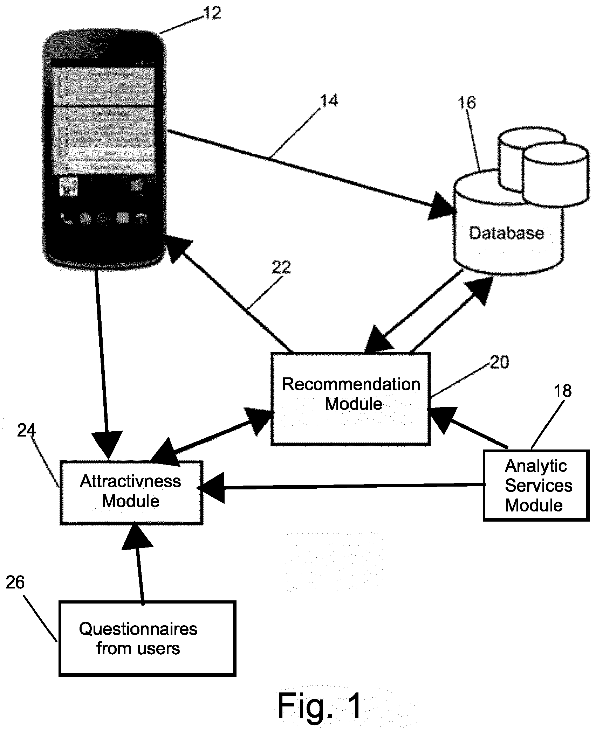

Fig. 1 schematically shows the main components of a coupon recommendation system that includes an attractiveness module that comprises software algorithms that enable the method of the invention to be carried out. The components of the system are:
- An application running on a user's mobile communication device 12. The application is responsible for collecting and sending sensor data and also interacts with the user showing him coupons recommended by the system.
- Sensor data 14 sent from mobile device 12 to a system data base 16 and an attractiveness module 24.
- A database 16 that contains all user data including, for example, sensor information, coupons offered and coupons consumed.
- An analytics services module 18, which comprises a processor and software containing algorithms configured to derive high level useful information from the sensor data. For example, based on the analysis of the data collected for a duration of one month from the activity sensor, which indicates the level of activity and direction of travel of the mobile phone, this component can derive with a high level of certainty that the user owns a car.
   The analytics services module also comprises communication components configured to access data sources that are external to the system, e.g., current weather from an external web site and social networks such as Facebook.
- A recommendation module 20, which comprises a processor and software containing algorithms configured to process contextual data comprised of raw sensor data received from the mobile device and non-device related data received from the analytic services module, to select a set of offers for the specific user and components configured to send this set of offers to the attractiveness module 24. The recommendation module is also responsible of updating the recommendation model based on previous offers and consumptions.
- An attractiveness module 24, which comprises a processor and software algorithms configured to build the model, in a first phase of the method, by learning the association between attributes of contextual data and interest labels collected from users.
   This model is used, in a second phase of the method, to derive an interest score for each of the coupons in the set sent by the recommendation module 20. The interest scores are sent to the recommendation module 20, which uses them to send the best offer 22 to the user.

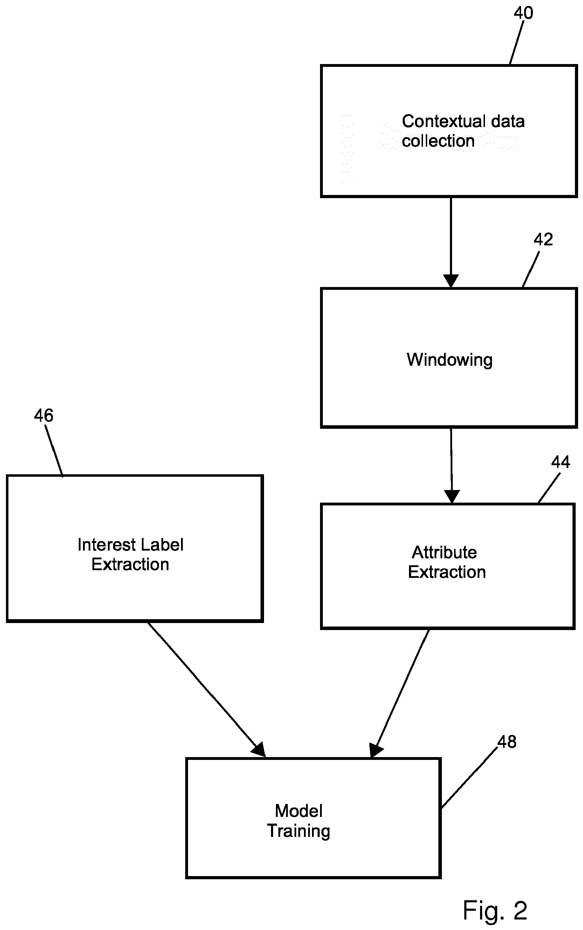

Fig. 2 schematically shows the steps of the algorithm in the attractiveness module 24 for the training phase of the method of the invention.
a. In step 40 contextual data comprising raw sensor data from the mobile device 12 and external data from the analytics service module 18 are sent to the attractiveness module 24.
b. In step 42 the contextual data is sliced into frames of limited time duration.
c. In step 44 attributes are extracted from the contextual data based on statistical measures such as mean, variance, and the correlation between them.
d. In step 46 interest labels for each coupon are extracted from information collected from users in interviews or questionnaires 26 and/or from knowledge if the coupon was consumed (i.e. used by the user) supplied from the recommendation module.
e. In step 48 the model, which for example can be a Gaussian Mixture Model or a Decision Tree, is trained by learning the association between attributes of the contextual data from step 44 and the interest labels collected from users in step 46.

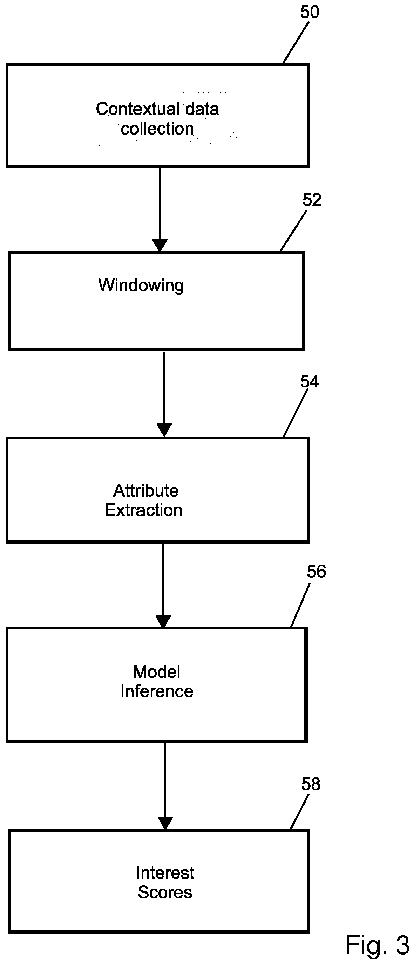

Fig. 3 schematically shows the steps of the algorithm in the attractiveness module 24 for the operational phase of the method of the invention.
f. In step 50 contextual data comprising raw sensor data from the mobile device 12 and external data from the analytics service module 18 are sent to the attractiveness module 24.
g. In step 52 the contextual data is sliced into frames of limited time duration.
h. In step 54 attributes are extracted from the contextual data based on statistical measures such as mean, variance, and the correlation between them.
i. In step 56 the attributes extracted from the contextual data in step 54 are fed into the model created in step 48 of the training phase.
j. In step 58 the processor of the attractiveness module 24 executes the software containing the model trained in step 48 to obtain as output interest scores, which are sent to the recommendation module 20 to be used in a predictive core algorithm of the recommendation process.

The processors of Fig. 1 comprise algorithms and the operations of Fig. 2 and Fig. 3 define algorithms, wherein these algorithms configure a computer or processing circuitry, e.g., the processor in the analytics services module 18, the recommendation module 20 and the attractiveness module 24 to perform an embodiment of the present invention. As such the software in the modules of Fig. 1 and the operations of Fig. 2 and Fig. 3, when executed, convert a computer or processing circuitry into a particular machine configured to perform an embodiment of the present invention.

As an example of how the present invention can improve a coupon recommendation service consider the case of a traveler visiting a new city who receives a coupon for lunch at a restaurant located near his hotel. The traveler has just eaten lunch so he doesn't consume the coupon. Prior art recommender systems typically use "consumption" of the coupon as an indicator of interest and would conclude that the traveler was not interested in that restraint. However, reaction feedback analysis applied according to the method of the invention, might indicate that the traveler was very interested in the coupon even through in this case it wasn't consumed. Based on this insight the recommender system could expand the offer sending a coupon for dinner that evening or lunch the following day at the same restaurant.

Although embodiments of the invention have been described by way of illustration, it will be understood that the invention may be carried out with many variations, modifications, and adaptations, without exceeding the scope of the claims.

## Claims

1. A system for executing a method of maximizing the chances that a user will consume a coupon offered to him by the operator of a coupon recommendation system via the user's mobile communication device, the system comprising:
a. an application running on a user's mobile communication device, the application responsible for collecting and sending raw sensor data and interacting with the user showing him coupons recommended by the system;
b. a database that contains all user data including sensor data sent from the user's mobile device, coupons offered, and coupons consumed;
c. an analytics services module, which comprises a processor and software containing algorithms configured for deriving high level useful information from the sensor data, the analytics services module also comprises communication components configured to access data sources that are external to the system;
d. a recommendation module, which comprises a processor and software containing algorithms that are configured to process contextual data and to introduce the processed data into a recommendation model configured to select a set of offers for the specific user; and
e. an attractiveness module, which comprises a processor and software algorithms configured to build a model that is configured to evaluate interest of the user in a coupon offered to him, to use the model to derive interest scores for each of the coupons in the set of offers selected by the recommendation module, and to send the interest scores to the recommendation module, which uses them to predict which coupon or coupons is most likely to be consumed by the user.

2. The system of claim 1, wherein the contextual data comprises raw sensor data received from the mobile device and non-device related data received from the analytic services module.

3. The system of claim 1, wherein the processor and software of the recommendation module are also responsible for updating the recommendation model based on previous offers and consumptions.

4. A method of using the system of claim 1 to maximize the chances that a user will consume a coupon offered to him by the operator of a coupon recommendation system via the user's mobile communication device by evaluating the interest of the user in a coupon/offer before it is sent to him/her;
wherein the method comprises two phases: a training phase in which a model that associates contextual data to the interest level of the user obtained through questioners and user studies is built by software algorithms in the processor of the attractiveness module of the system and an operational phase in which attributes extracted from contextual data are fed into the model built during the training phase in order to obtain interest scores, which are sent from the attractiveness module to the recommendation module.

5. The method of claim 4, wherein the training phase comprises:
a. sending contextual data comprising raw sensor data from the mobile device and external data from the analytics service module to the attractiveness module;
b. executing software algorithms in the processor of the attractiveness module to slice the contextual data into frames of limited time duration;
c. executing software algorithms in the processor of the attractiveness module to extract attributes from the contextual data based on statistical measures;
d. executing software algorithms in the processor of the attractiveness module to extract interest labels for each coupon from information collected from users in interviews or questionnaires and/or from knowledge supplied from the recommendation module concerning whether the coupon was consumed ; and
e. executing software algorithms in the processor of the attractiveness module to train the model by learning the association between the attributes of the contextual data and the interest labels extracted from the information collected from users.

6. The method of claim 4, wherein the model is one of a Gaussian Mixture Model or a Decision Tree.

7. The method of claim 5, wherein the statistical measures comprise at least one of mean, variance, and the correlation between them.

8. The method of claim 4, wherein the operational phase comprises:
a. sending contextual data comprising raw sensor data from the mobile device and external data from the analytics service module to the attractiveness module;
b. executing software algorithms in the processor of the attractiveness module to slice the contextual data into frames of limited time duration;
c. executing software algorithms in the processor of the attractiveness module to extract attributes from the contextual data based on statistical measures;
d. feeding the attributes extracted from the contextual data into the model trained by software algorithms in the processor of the attractiveness module;
e. executing software comprising the trained model in the processor of the attractiveness module to obtain interest scores;
f. sending the interest scores from the attractiveness module to the recommendation module;
g. executing a predictive core algorithm of the recommendation process in the recommendation module to predict which coupon or coupons are most likely to be consumed by the user.
